# EUROPEAN PATENT SPECIFICATION

(11) **EP 3 077 100 B1**
(45) Date of publication and mention of the grant of the patent: **11.03.2020**
(21) Application number: 14815410.7
(22) Date of filing: 05.12.2014
(51) Int. Cl.: C01B 32/16, C01B 32/162, B01J 19/08, B01J 19/24

(54) **PROCESS AND APPARATUS FOR THE PRODUCTION OF CARBON NANOTUBES**
VERFAHREN UND VORRICHTUNG ZUR HERSTELLUNG VON KOHLENSTOFFNANORÖHRCHEN
PROCÉDÉ ET APPAREIL DE PRODUCTION DE NANOTUBES DE CARBONE

(30) Priority: 05.12.2013 GB 201321440
(43) Date of publication of application: 12.10.2016
(73) Proprietor: Q-Flo Limited, Nottingham, Nottinghamshire NG1 1GF (GB)
(72) Inventor: PICK, Martin, High Melton Doncaster DN5 7SY (GB); SWANSON, Jacob John, Richfield, Minnesota 55044 (US); SMAIL, Fiona Ruth, Cambridge Cambridgeshire CB4 1RS (GB); BOIES, Adam, Cambridge Cambridgeshire CB1 2PF (GB); HOECKER, Christian, Cambridge Cambridgeshire CB3 0DS (GB); HEFETZ, Meir, Ma'alot Tarshiha 24952 (IL)
(74) Representative: Stuttard, Garry Philip
(86) International application number: PCT/GB2014/053621
(87) International publication number: WO 2015/082936

(56) References cited:
- EP-A1- 1 790 613
- US-A1- 2003 111 334
- US-A1- 2009 238 996
- US-A1- 2011 165 058
- US-A1- 2012 201 266

## Description

The present invention relates to a process and apparatus for the production of carbon nanotubes.

Carbon nanotubes are of considerable interest for a variety of applications owing to their exceptional mechanical, electrical and chemical properties. However the mass production of carbon nanotubes at an industrial scale is still to be achieved. Current processes produce a low yield of carbon nanotubes with low levels of impurities, a high yield of carbon nanotubes with high levels of impurities (>60%) or low throughput.

US7591989B discloses a method for producing single-walled carbon nanotubes within a plasma discharge. The approach seeks to eliminate carbon build-up within the primary plasma torch by injecting carbon precursors directly into *"secondary"* plasma downstream of the electrodes. Within the secondary plasma region, the carbon precursor is a component of the plasma gases and dissociates forming free carbon ions and atoms. The atomic carbon is then allowed to nucleate on metal catalysts that are injected either into the primary plasma or secondary plasma. The method relies inherently on thermodynamic formation rates of metal catalyst particles to form before the nucleation of carbon thus leading to large quantities of unwanted graphitic carbon or *"soot".*

US7846414B discloses a process for synthesising carbon nanotube plasma which utilizes a DC non-transferred thermal plasma torch. A carbon precursor is passed through the plasma region to create atomic species that freely nucleate on a catalyst. The method is subject to the limitations of the thermodynamic rate of formation of catalyst particles and subsequent availability of carbon outside the catalyst surface which may induce the formation of graphitic carbon.

WO-A-2006/135253 discloses a method for producing carbon nanotubes in which plasma is generated by rotating an electric arc using an externally applied magnetic field. A carbon precursor is decomposed within the plasma.

US-A-2012/0201266 discloses a plasma reactor with downstream temperature modulation achieved by different axial and radial geometries to control quenching of nanopowders produced within the plasma. A temperature-controlled region between the plasma discharge and the collection chamber is intended to control the formation of nanopowder. Particles are formed only from material that is passed through the plasma region and reactants are not added downstream for the purposes of modifying the particle surface or inducing carbon nanotube growth. Quench gases are used to cool the formation of the nanopowders and are not intended to add mass to the powder in the downstream quenching process.

WO-A-2005/07926 discloses the production of agglomerates of nanomaterials such as carbon nanotubes which are manipulated into a fibre. Reactants flow into a single hot-wall reactor and decompose to form particles and subsequently form the nanomaterials. Similar to single reactor plasma processes, the process relies on thermodynamic rates to control the sequential production of particles and fibre.

US-A-2011/0165058 discloses in schematic terms a two-step process for the production of carbon nanotubes which includes a first step of generating catalyst particles in a microplasma reactor.

The present invention seeks to improve the production of carbon nanotubes by forming particulate metal catalyst and carbon nanotubes in discrete sequential steps of a continuous process. In particular, the present invention relates to a process in which plasma is generated and used to initiate the production of a particulate metal catalyst which is mixed downstream with a source of carbon in a temperature-controlled flow-through reactor.

Thus viewed from a first aspect the present invention provides a process for the production of carbon nanotubes comprising:
(A) generating a directed flow of plasma from a working gas in a plasma generating device;
(B) introducing a metal catalyst or metal catalyst precursor radially into the directed flow of plasma in the plasma generating device;
(C) discharging a plasma effluent from the plasma generating device into a quenching chamber;
(D) introducing one or more quenching gases into the quenching chamber to quench the plasma effluent whereby to produce a particulate metal catalyst;
(E) discharging the particulate metal catalyst from the quenching chamber axially into a temperature-controlled flow-through reactor;
(F) introducing a source of carbon radially into the temperature-controlled flow-through reactor to produce carbon nanotubes; and
(G) discharging the carbon nanotubes from a discharge outlet of the temperature-controlled flow-through reactor

By separating the formation of particulate metal catalyst from the introduction of the source of carbon, the process of the invention ensures that it is primarily the surface of catalyst particles of an optimum size which are available to decompose the source of carbon. The process of the present invention therefore advantageously minimizes under-utilisation of catalyst particles and inhibits formation of non-carbon nanotube material (eg soot) to achieve a high yield of carbon nanotubes.

Typically the particulate metal catalyst is a nanoparticulate metal catalyst. Preferably the nanoparticles of the nanoparticulate metal catalyst have a mean diameter (eg a number, volume or surface mean diameter) in the range 1 to 50 nm.

Preferably 80% or more of the particles of the nanoparticulate metal catalyst have a diameter of less than 30 nm. Particularly preferably 80% or more of the particles of the nanoparticulate metal catalyst have a diameter of less than 12 nm.

The concentration of the particulate metal catalyst produced in step (D) may be in the range 10⁶ to 10¹⁰ particles cm⁻³.

Typically the metal catalyst is one or more of the group consisting of alkali metals, transition metals, rare earth elements (*eg* lanthanides) and actinides.

Preferably the metal catalyst is one or more of the group consisting of transition metals, rare earth elements (*eg* lanthanides) and actinides.

Preferably the metal catalyst is at least one of the group consisting of Fe, Ru, Co, W, Cr, Mo, Rh, Ir, Os, Ni, Pd, Pt, Ru, Y, La, Ce, Mn, Pr, Nd, Tb, Dy, Ho, Er, Lu, Hf, Li and Gd.

Preferably the metal catalyst is iron.

The metal catalyst precursor may be a metal complex or organometallic metal compound. Examples include iron pentacarbonyl, ferrocene or a ferrocenyl derivative (*eg* ferrocenyl sulphide).

Preferably the metal catalyst precursor is sulphur-containing. A metal catalyst precursor which is sulphur-containing may promote carbon nanotube growth.

Preferably the metal catalyst precursor is a sulphur-containing organometallic. Particularly preferably the metal catalyst precursor is a sulphur-containing iron organometallic. More preferably the metal catalyst precursor is a sulphur-containing ferrocenyl derivative. Yet more preferably the metal catalyst precursor is mono-(methylthio) ferrocene or bis-(methylthio) ferrocene.

In a preferred embodiment, the metal catalyst precursor is ferrocene and a sulphur-containing ferrocenyl derivative. This embodiment gives advantageous control over the Fe:S ratio for optimal CNT growth.

The metal catalyst or metal catalyst precursor may be introduced in step (a) together with a sulphur-containing additive. The sulphur-containing additive may promote carbon nanotube growth. The sulphur-containing additive may be thiophene, iron sulphide, a sulphur-containing ferrocenyl derivative (*eg* ferrocenyl sulphide) or carbon disulphide.

In a preferred embodiment, the metal catalyst precursor is ferrocene optionally together with a sulphur-containing additive being thiophene or carbon disulphide.

The plasma may be a thermal, non-thermal, cold or microwave plasma. Preferably the plasma is a thermal plasma (*eg* an induction thermal plasma).

The directed flow of plasma may be generated from the working gas in step (A) by heat, direct current (DC), alternating current (AC), microwave irradiation, laser or a radiofrequency (RF) electric field.

Preferably the directed flow of plasma is generated from the working gas in step (A) by direct current or a radiofrequency electric field.

The working gas is typically one or more inert or reducing gases. A preferred working gas is hydrogen and argon.

The production of particulate metal catalyst may be initiated in step (B) by thermal decomposition or dissociation of the metal catalyst or metal catalyst precursor into metal species (*eg* atoms, radicals or ions).

The production of particulate metal catalyst in step (D) may comprise nucleation accompanied by particle growth. The result is clusters of particulate metal catalyst and a wider distribution of particle diameters. The quenching gas reduces the rate of these growth mechanisms allowing control of the particle size distribution.

The metal catalyst or metal catalyst precursor introduced in step (B) may be in a gaseous, liquid or solid form. The metal catalyst or metal catalyst precursor may be introduced in step (B) with a non-metal catalyst modifier or precursor thereof. The non-metal catalyst modifier may be chalcogen-containing (*eg* sulphur-containing).

In a preferred embodiment, step (B) is: introducing a metal catalyst precursor into the directed flow of plasma in the plasma generating device.

The metal catalyst precursor may be sublimable. Step (B) may be preceded by the step of sublimating the metal catalyst precursor.

The metal catalyst or metal catalyst precursor may be introduced from outside the plasma generating device. The metal catalyst or metal catalyst precursor may be introduced in a vortical, helical, laminar or turbulent flow path.

The metal catalyst or metal catalyst precursor may be introduced at a plurality of locations.

The metal catalyst or metal catalyst precursor may be in a mixture with a carrier gas. The carrier gas is typically one or more of argon, helium or hydrogen. The mass flow of the metal catalyst or metal catalyst precursor in admixture with the carrier gas is generally in the range 10 to 30 lpm.

The one or more quenching gases act as a diluent which advantageously serves to suppress the growth of particulate metal catalyst to prevent agglomeration (*ie* to control the diameter of the particulate metal catalyst). The residence time in the quenching chamber is preferably less than 1000 ms *(eg* in the range 10 to 1000 ms).

In a preferred embodiment, the one or more quenching gases is metal-containing. A quenching gas which is metal-containing may modify the particle cores for enhanced carbon nanotube growth during step (F). The quenching gas may be iron-containing (*eg* ferrocene).

The one or more quenching gases may be chalcogen-containing. Preferably the one or more quenching gases is sulphur-containing. A quenching gas which is chalcogen-containing (*eg* sulphur-containing) may promote carbon nanotube growth. The source of sulphur for the sulphur-containing quenching gas may be the metal catalyst precursor. Alternatively the sulphur-containing quenching gas may be exogenous (*eg* an additive). The sulphur-containing quenching gas may be thiophene, iron sulphide, a sulphur-containing ferrocenyl derivative (*eg* ferrocenyl sulphide) or carbon disulphide.

Preferably the one or more quenching gases are hydrogen and/or argon.

Preferably the one or more quenching gases are hydrogen and a source of sulphur (*eg* thiophene).

The one or more quenching gases may include a reactive gas.
The one or more quenching gases may be introduced in step (D) in a vortical, helical, laminar or turbulent flow path.

The one or more quenching gases may be introduced radially in step (D) (*eg* by multiple radial ports in the quenching chamber).

In a preferred embodiment, steps (E) and (F) are substantially concurrent.

Before step (E), the particulate metal catalyst may be heated.

Before step (E), the particulate metal catalyst may be subjected to radiative heat transfer by a source of infrared, visible, ultraviolet or x-ray energy.

Before step (E), the particulate metal catalyst may be subjected to chemical modification.

Before step (E), the process may further comprise: (D1) introducing a carbon precursor into the quenching chamber. The carbon precursor may decompose in the presence of the particulate metal catalyst to promote growth of carbon nanotubes in step (E).

In step (E), the particulate metal catalyst may be discharged to form a vortical, helical, laminar or turbulent flow path.

In step (E), the particulate metal catalyst may be discharged into the temperature-controlled flow-through reactor at a plurality of locations.

Before step (F), the source of carbon may be heated.

Before step (F), the source of carbon may be subjected to radiative heat transfer by a source of infrared, visible, ultraviolet or x-ray energy.

In step (F), the source of carbon may be introduced in a vortical, helical, laminar or turbulent flow path.

In step (F), the source of carbon may be introduced at a plurality of locations.

Preferably step (F) is: introducing the source of carbon substantially in a radial plane at a plurality of angles in the range -90° to +90°.

The source of carbon may be an optionally substituted and/or optionally hydroxylated aromatic or aliphatic, acyclic or cyclic hydrocarbon (*eg* alkyne, alkane or alkene) which is optionally interrupted by one or more heteroatoms *(eg* oxygen). Preferred is an optionally halogenated C₁₋₆-hydrocarbon (*eg* methane, propane, acetylene or tetrachloroethylene), an optionally mono-, di- or tri-substituted benzene derivative (*eg* toluene) or C₁₋₆-alcohol *(eg* ethanol).

Preferably the source of carbon is methane optionally (but preferably) in the presence of an optionally substituted and/or optionally hydroxylated aromatic or aliphatic, acyclic or cyclic hydrocarbon (*eg* alkyne, alkane or alkene) which is optionally interrupted by one or more heteroatoms (*eg* oxygen).

In a preferred embodiment, the source of carbon is methane optionally in the presence of propane or acetylene.

Typically in step (c), the source of carbon is introduced with a carrier gas such as helium, hydrogen or argon.

The carbon nanotubes may be single-walled and/or multi-walled carbon nanotubes.

The temperature-controlled flow-through reactor may be cylindrical. The temperature-controlled flow-through reactor may be substantially vertical or horizontal. Preferably the temperature-controlled flow-through reactor is substantially horizontal.

Viewed from a further aspect the present invention provides an apparatus for the production of carbon nanotubes comprising:
a plasma generating device for generating a directed flow of plasma, wherein the plasma generating device comprises:
   an elongate housing extending from an upstream end to a downstream end,
   a primary feed at or near to the upstream end of the elongate housing for feeding a continuous flow of a working gas from the upstream end to and beyond the downstream end of the elongate housing,
   a source of energy located midstream in the elongate housing which in use is sufficient to induce ionisation of the working gas whereby to generate the directed flow of plasma and cause the discharge of plasma effluent from the downstream end of the elongate housing,
   wherein the plasma generating device is adapted to introduce a metal catalyst or metal catalyst precursor radially into the directed flow of plasma,
a quenching chamber containing the downstream end of the elongate housing, wherein the quenching chamber is adapted to introduce one or more quenching gases for quenching the plasma effluent whereby to produce particulate metal catalyst and is further adapted to discharge axially the particulate metal catalyst; and
a temperature-controlled flow-through reactor downstream from the quenching chamber, wherein the temperature-controlled flow-through reactor is adapted to introduce radially a source of carbon,
wherein the longitudinal axes of the plasma generating device, quenching chamber and temperature-controlled flow-through reactor are substantially collinear and define a substantially linear flow path.

The downstream end of the elongate housing may be a discharge nozzle for discharging plasma effluent.

The elongate housing, primary feed and source of energy may constitute a plasma torch, plasma arc or plasma gun.

Preferably the source of energy is a cathode and an anode mounted midstream in the elongate housing in spaced apart relationship between which in use there is formed an electric arc.

Particularly preferably one or both of the cathode and anode is composed of the metal catalyst. In this embodiment, an electric field applied to the anode and cathode may be sufficient to cause sublimation and/or ablation of the metal catalyst into metal species (*eg* atoms, radicals or ions).

Alternatively preferably the source of energy is an induction coil mounted midstream in the housing.

In a preferred embodiment, the plasma generating device is adapted to introduce a metal catalyst or metal catalyst precursor into the directed flow of plasma by a secondary feed in the elongate housing.

The secondary feed may be axial, radial or tangential to the axis of the elongate housing.

Preferably the secondary feed is a radial port or injection nozzle (*eg* a radial port or injection nozzle at or near to the mid-point of the elongate housing). More preferably the radial port or injection nozzle is adjacent to the source of energy (preferably adjacent to the high temperature region of the directed flow of plasma).

The metal catalyst or metal catalyst precursor may be conveyed to the secondary feed by a carrier gas in a feed assembly. The metal catalyst or metal catalyst precursor may be conveyed from a reservoir housed in an evaporator.

In a preferred embodiment, the quenching chamber is adapted to introduce one or more quenching gases by multiple ports (*eg* multiple radial ports).

In a preferred embodiment, the quenching chamber is adapted to discharge the particulate metal catalyst by a multi-orificial injector (*eg* a shower head injector).

The walls of the quenching chamber may be selectively heated.

The walls of the quenching chamber may be selectively cooled by exposure to a cooling fluid such as water, liquid nitrogen or liquid helium.

The temperature-controlled flow-through reactor may be adapted to introduce a source of carbon by an injection nozzle or a multi-orificial injector (*eg* a shower head injector).

Preferably the distance between the point of discharge of the particulate metal catalyst and the point of introduction of the source of carbon is 10cm or less.

Preferably the temperature of the temperature-controlled flow-through reactor is controlled by resistive heating.

Preferably the temperature-controlled flow-through reactor is adapted to provide an axial temperature gradient.

The walls of the temperature-controlled flow-through reactor may be selectively cooled by exposure to a cooling fluid such as water, liquid nitrogen or liquid helium.

The temperature-controlled flow-through reactor may be cylindrical.

In a preferred embodiment, the temperature-controlled flow-through reactor is fitted at or near to its upstream end with a manifold to assist radial introduction of the source of carbon or discharge of the particulate metal catalyst from the quenching chamber radially into the temperature-controlled flow-through reactor.

The present invention will now be described in a non-limitative sense with reference to Examples and the accompanying Figures in which:
Figure 1 is a schematic illustration of a first embodiment of an apparatus according to the invention which is used to carry out a first embodiment of the process of the invention; and
Figure 2 is provided for illustrative purposes only and is a schematic illustration of an apparatus which does not form part of the invention.

### Example 1

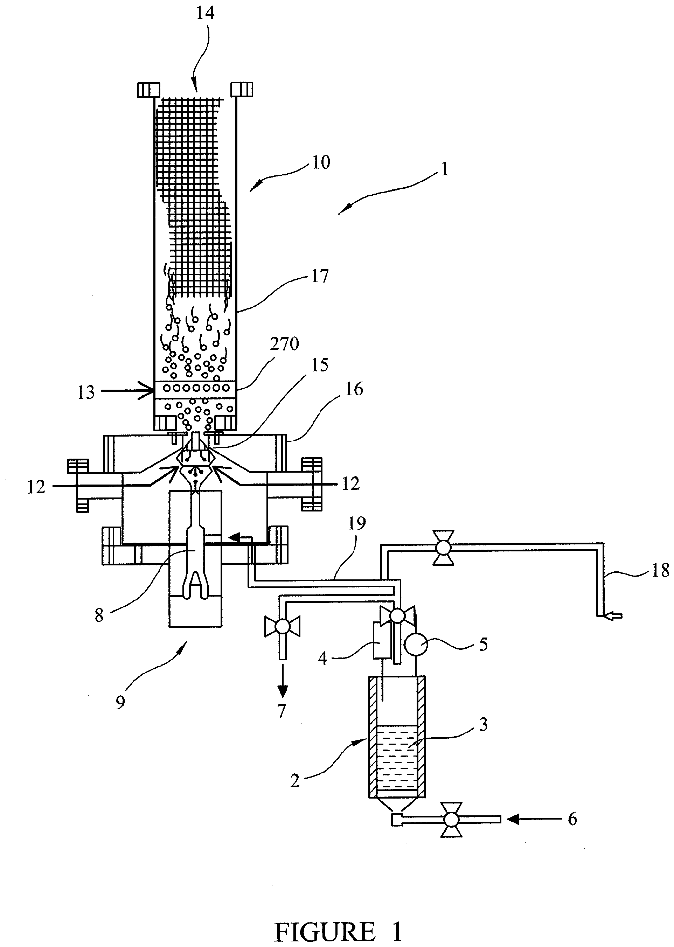

Figure 1 is a schematic illustration of a first embodiment of an apparatus according to the invention designated generally by reference numeral (1) which is used to carry out a first embodiment of the process of the invention. The apparatus (1) comprises a DC thermal plasma torch (9) equipped with a radial injection nozzle (8). The downstream end of the plasma torch (9) is a discharge nozzle (11) and is contained by a quenching chamber (16). The apparatus (1) further comprises a temperature-controlled flow-through reactor (10) downstream from the quenching chamber (16) in which temperature control is achieved by cylindrical reactor walls (17) heated by resistive elements. The longitudinal axes of the plasma torch (9), quenching chamber (16) and temperature-controlled flow-through reactor (10) are substantially collinear and define a substantially linear flow path.

Ferrocene (3) is sublimated in a bubbler (2) fitted with a pressure controller (4), pressure gauge (5) and vacuum (7) and is conveyed by hydrogen carrier gas (6) through a feed assembly (19) to the radial injection nozzle (8) of the plasma torch (9). An additional feed assembly (18) is provided to introduce additives (such as a carbon-containing additive) to the flow of ferrocene (3) and hydrogen carrier gas (6) in the feed assembly (19).

The plasma torch (9) generates a directed flow of plasma from a mixture of working gases Ar/H₂ (30/0.5 lpm). The ferrocene (3) is injected into the plasma torch (9) via the radial injection nozzle (8) in a manner such that the momentum of the impinging jet is sufficient to penetrate the high temperature region of the plasma (see Rao, N.P, et al, Nanostructured materials production by hypersonic plasma particle deposition. Nanostructured Materials, 1997. 9 (1-8): p. 129-132).

The temperature of the bubbler (2) and the flow rate of the hydrogen carrier gas (6) contribute to the momentum of the impinging jet.

In the directed flow of plasma generated by the plasma torch (9), the ferrocene (3) decomposes into elemental or radical species referred to as *"activated species".* The enthalpy of the plasma which is determined by the applied electrical power determines the rate of dissociation of the ferrocene (3). Thus the concentration of activated species is primarily controlled by regulating the power applied to the plasma torch (9) (typically 5-10 kW) and the mass flow of ferrocene (3) and hydrogen carrier gas (6) (typically 10-30 lpm) into the plasma torch (9).

The activated species nucleate to form atomic clusters that then grow through surface growth (gas-to-particle conversion) and cluster collisions (particle-particle agglomeration and coalescence). Growth is a function of the concentration of activated species, the number concentration of nucleated particles, the available surface area of the particles, the residence time, the temperature of the particles and plasma effluent and the system pressure.

Following discharge of plasma effluent from the discharge nozzle (11) as a jet into the quenching chamber (16), quenching gases are radially-injected into the quenching chamber (16) at inlets (12) and are turbulently entrained in the plasma effluent which serves to rapidly cool the flow. The quenching gases are hydrogen and thiophene. Rapid cooling supersaturates the activated species and increases the tendency for particle nucleation and subsequent rapid agglomeration. However the dilution of the plasma effluent by the quenching gases reduces particle collisions to suppress the increased tendency for nucleation thereby controlling the particle size. Thiophene thermally decomposes in the hot (300-1000°C) plasma effluent to form a coating on the surface of the catalyst particles. This stabilizes the catalyst particles and enhances their effectiveness in producing carbon nanotubes in the temperature-controlled flow-through reactor (10). Particle concentrations of 10⁶ to 10¹⁰ particles cm⁻³ are achieved with diameters in the range 1 to 50 nm.

Residence times in the quenching chamber (16) are purposely short (typically 10 to 1000 ms) to suppress agglomeration after nucleation and surface growth. The temperature of the walls of the quenching chamber (16) impacts on the decomposition of thiophene and coating of the catalyst particles. Whilst water-cooled walls assist in rapidly reducing the temperature of the plasma effluent, ceramic walls maintain a high temperature (300-1600°C) which is useful in the decomposition of thiophene.

From the quenching chamber (16), the catalyst particles are injected axially into the temperature-controlled flow-through reactor (10) via a showerhead injector (15). A mixture of methane (13) and hydrogen carrier gas is injected radially through a circumferential manifold (270) at an axial location within 10 cm of the showerhead injector (15). The radial injection of methane (13) serves to sheath the flow of particle-laden plasma effluent thereby reducing diffusional losses of catalyst particles to the reactor walls (17).

As methane (13) is heated via diffusional heat transfer from the reactor walls (17), it begins to decompose on the surface of the catalyst particles to produce atomic carbon. The carbon source catalytically decomposes on the nanoparticle. When the carbon reaches its solubility limit on the catalyst nanoparticle, carbon is precipitated as nanotubes. As the catalyst-carbon nanotube particles flow down the temperature-controlled flow-through reactor (10), carbon growth continues until the particles pass out of an outlet (14) of the temperature-controlled flow-through reactor (10) towards downstream processing and collection.

### Example 2

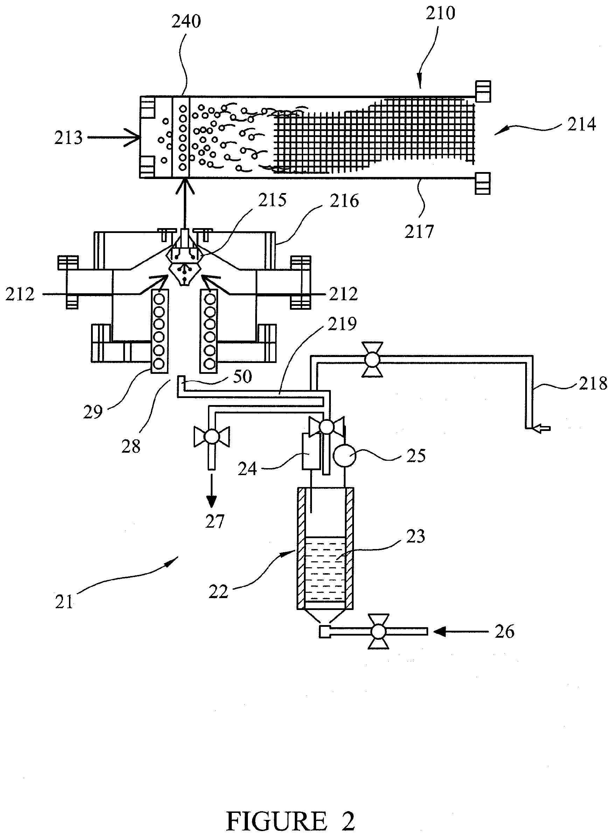

Figure 2 is provided for illustrative purposes only and is a schematic illustration of an apparatus which does not form part of the invention designated generally by reference numeral (21).

The apparatus (21) comprises an RF inductively coupled plasma torch (29) equipped with an axial feed (50) at the upstream end (28). The downstream end of the plasma torch (29) is contained by a quenching chamber (216). The apparatus (21) further comprises a temperature-controlled flow-through reactor (210) downstream from the quenching chamber (216) in which temperature control is achieved by cylindrical reactor walls (217) heated by resistive elements. The longitudinal axes of the plasma torch (29) and quenching chamber (216) are substantially collinear and define a substantially linear flow path. The longitudinal axis of the temperature-controlled flow-through reactor (210) is substantially normal to the longitudinal axes of the plasma torch (29) and quenching chamber (216).

Ferrocene (23) is sublimated in a bubbler (22) fitted with a pressure controller (24), pressure gauge (25) and vacuum (27) and is conveyed by hydrogen carrier gas (26) through a feed assembly (219) to the axial feed (50) at the upstream end (28) of the plasma torch (29). An additional feed assembly (218) is provided to introduce additives (such as a carbon-containing additive) to the flow of ferrocene (23) and hydrogen carrier gas (26) in the feed assembly (219).

The plasma torch (29) generates a directed flow of plasma from a mixture of working gases Ar/H₂ (30/0.5 lpm). The ferrocene (23) is axially injected by the axial feed (50) into the upstream end (28) of the plasma torch (29) with the working gases.

In the directed flow of plasma generated by the plasma torch (29), the ferrocene (23) decomposes into elemental or radical species referred to as *"activated species"* as described in Example 1. The power applied to the plasma torch (29) is typically 5-30 kW and the mass flow of ferrocene (23) and hydrogen carrier gas (26) into the plasma torch (29) is typically 10-30 lpm.

Following discharge of plasma effluent from the downstream end of the plasma torch (29) into the quenching chamber (216), quenching gases are radially-injected at inlets (212) and are turbulently entrained in the plasma effluent. The quenching gases are hydrogen and thiophene. The effects of this in terms of rapid cooling and the impact of dilution and stabilisation are described in Example 1.

Cooling generally occurs at a slower rate than in the first embodiment as the plasma effluent is less confined thereby causing slower entrainment of the quenching gases (typically 20-100°C). Slower cooling typically leads to a broader size distribution of catalyst particles (geometric standard deviation >1.5 compared with 1.3-1.5 for the first embodiment). Increased dilution of the plasma effluent can reduce the geometric standard deviation to 1.4-1.5. On the other hand, the conversion of thiophene is typically higher than in the first embodiment due to the entirety of thiophene passing directly through the plasma region.

A mixture of methane (213) and hydrogen carrier gas is injected axially from a showerhead injector (not shown) into the temperature-controlled flow-through reactor (210) and is allowed to heat to a temperature in excess of 800°C before the injection of the catalyst particles. From the quenching chamber (216), the catalyst particles are injected radially into the temperature-controlled flow-through reactor (210) via a showerhead injector (215) through a circumferential manifold (240). The methane immediately begins to decompose on the surface of the catalyst particles to produce atomic carbon. The atomic carbon then rearranges on the catalyst surface to start the growth of carbon nanotubes on the catalyst particles. As the catalyst-carbon nanotube particles flow down the temperature-controlled flow-through reactor (210), carbon growth continues until the particles pass out of an outlet (214) of the temperature-controlled flow-through reactor (210) towards downstream processing and collection.

### Example 3

In a further embodiment of the process of the invention, an electrode composed of a transition metal is ablated and sublimated by a plasma spark discharge in a cross flow of working gas (typically 10-30 lpm of mixtures of argon, helium and hydrogen). The breakdown of an electric field between two spaced apart electrodes is accomplished by applying a high frequency alternating voltage to electrodes. The breakdown causes electron and ions to bombard the surface of the transition metal electrode from which transition metal atoms are ablated. The high power dissipation through the spark causes increased temperature and results in transition metal atoms also leaving the surface due to sublimation. After leaving the surface of the electrode, the transition metal atoms are almost immediately supersaturated in the cool (<300°C) cross flow of working gas.

Upon supersaturation the particles nucleate and grow via gas-to-particle conversion and particle-particle collisions. Growth is controlled downstream by injection of a quenching gas that serves to quench growth and preserve particle size.

The catalyst particles are injected axially into a temperature-controlled flow-through reactor. A source of carbon (typically methane) and hydrogen carrier gas are injected radially into the temperature-controlled flow-through reactor. The hydrogen and methane are preheated to 800°C before radial injection. The surface of the catalyst is an activation site for the decomposition of methane which is followed by nucleation and growth. As the catalyst-carbon nanotube particles flow down the temperature-controlled flow-through reactor, carbon growth continues until the particles pass out of an outlet of the temperature-controlled flow-through reactor towards downstream processing and collection.

## Claims

1. A process for the production of carbon nanotubes comprising:
(A) generating a directed flow of plasma from a working gas in a plasma generating device (9);
(B) introducing a metal catalyst or metal catalyst precursor (3) radially into the directed flow of plasma in the plasma generating device (9);
(C) discharging a plasma effluent from the plasma generating device (9) into a quenching chamber (16);
(D) introducing one or more quenching gases into the quenching chamber (16) to quench the plasma effluent whereby to produce a particulate metal catalyst;
(E) discharging the particulate metal catalyst from the quenching chamber (16) axially into a temperature-controlled flow-through reactor (10);
(F) introducing a source of carbon (13) radially into the temperature-controlled flow-through reactor (10) to produce carbon nanotubes; and
(G) discharging the carbon nanotubes from a discharge outlet (14) of the temperature-controlled flow-through reactor (10).

2. A process as claimed in claim 1 wherein the particulate metal catalyst is a nanoparticulate metal catalyst.

3. A process as claimed in claim 1 or 2 wherein the directed flow of plasma is generated from the working gas in step (A) by direct current or a radiofrequency electric field.

4. A process as claimed in any preceding claim wherein the residence time in the quenching chamber (16) is less than 1000 ms.

5. A process as claimed in any preceding claim wherein step (F) is:
introducing the source of carbon (13) substantially in a radial plane at a plurality of angles in the range -90° to +90°.

6. An apparatus (1) for the production of carbon nanotubes comprising:
a plasma generating device (9) for generating a directed flow of plasma, wherein the plasma generating device (9) comprises:
an elongate housing extending from an upstream end to a downstream end,
a primary feed at or near to the upstream end of the elongate housing for feeding a continuous flow of a working gas from the upstream end to and beyond the downstream end of the elongate housing,
a source of energy located midstream in the elongate housing which in use is sufficient to induce ionisation of the working gas whereby to generate the directed flow of plasma and cause the discharge of plasma effluent from the downstream end of the elongate housing,
wherein the plasma generating device (9) is adapted to introduce a metal catalyst or metal catalyst precursor (3) radially into the directed flow of plasma,
a quenching chamber (16) containing the downstream end of the elongate housing, wherein the quenching chamber (16) is adapted to introduce one or more quenching gases for quenching the plasma effluent whereby to produce particulate metal catalyst and is further adapted to discharge axially the particulate metal catalyst; and
a temperature-controlled flow-through reactor (10) downstream from the quenching chamber (16), wherein the temperature-controlled flow-through reactor (10) is adapted to introduce radially a source of carbon (13),
wherein the longitudinal axes of the plasma generating device (9), quenching chamber (16) and temperature-controlled flow-through reactor (10) are substantially collinear and define a substantially linear flow path.

7. An apparatus (1) as claimed in claim 6 wherein the source of energy is a cathode and an anode mounted midstream in the elongate housing in spaced apart relationship between which in use there is formed an electric arc.

8. An apparatus (1) as claimed in claim 6 wherein the source of energy is an induction coil mounted midstream in the elongate housing.

9. An apparatus (1) as claimed in any of claims 6 to 8 wherein the plasma generating device (9) is adapted to introduce a metal catalyst or metal catalyst precursor (3) radially into the directed flow of plasma by a secondary feed (8) in the elongate housing.

10. An apparatus (1) as claimed in any of claims 6 to 9 wherein the distance between the point of discharge of the particulate metal catalyst and the point of introduction of the source of carbon (13) is 10cm or less.

## Patentansprüche

1. Verfahren zur Herstellung von Kohlenstoffnanoröhren, umfassend:
(A) Erzeugen eines gerichteten Plasmastroms von einem Arbeitsgas in einer Plasma-erzeugenden Vorrichtung (9);
(B) Einführen eines Metallkatalysators oder Metallkatalysatorvorläufers (3) radial in den gerichteten Plasmastrom in der Plasma-erzeugenden Vorrichtung (9);
(C) Abführen eines Plasmaabgases von der Plasma-erzeugenden Vorrichtung (9) in eine Quenchkammer (16);
(D) Einführen eines oder mehrerer Quenchgase(s) in die Quenchkammer (16), um das Plasmaabgas zu quenchen, wobei ein teilchenförmiger Metallkatalysator hergestellt wird;
(E) Abführen des teilchenförmigen Metallkatalysators aus der Quenchkammer (16) axial in einen temperierten Durchflussreaktor (10);
(F) Einführen einer Kohlenstoffquelle (13) radial in den temperierten Durchflussreaktor (10), um Kohlenstoffnanoröhren herzustellen; und
(G) Abführen der Kohlenstoffnanoröhren aus einer Abführöffnung (14) des temperierten Durchflussreaktors (10).

2. Verfahren wie in Anspruch 1 beansprucht, wobei der teilchenförmige Metallkatalysator ein nanoteilchenförmiger Metallkatalysator ist.

3. Verfahren wie in Anspruch 1 oder 2 beansprucht, wobei der gerichtete Plasmastrom vom Arbeitsgas in Schritt (A) durch gerichteten Strom oder ein elektrisches Radiofrequenzfeld erzeugt wird.

4. Verfahren wie in einem der vorhergehenden Ansprüche beansprucht, wobei die Verweilzeit in der Quenchkammer (16) weniger als 1000 ms ist.

5. Verfahren wie in einem der vorhergehenden Ansprüche beansprucht, wobei Schritt (F) ist:
Einführen der Kohlenstoffquelle (13) im Wesentlichen in einer radialen Ebene bei einer Vielzahl von Winkeln im Bereich von -90° bis +90°.

6. Gerät (1) zur Herstellung von Kohlenstoffnanoröhren, umfassend:
eine Plasma-erzeugende Vorrichtung (9) zum Erzeugen eines gerichteten Plasmastroms, wobei die Plasma-erzeugende Vorrichtung (9) das Folgende umfasst:
ein längliches Gehäuse, das sich von einem stromaufwärtigen Ende bis zu einem stromabwärtigen Ende erstreckt,
eine Primäreinspeisung bei oder nahe des stromaufwärtigen Endes des länglichen Gehäuses zum Einspeisen eines kontinuierlichen Stromes eines Arbeitsgases vom stromaufwärtigen Ende bis zum stromabwärtigen Ende des länglichen Gehäuses und darüber hinaus,
eine Energiequelle, die sich im Mittelstrom im länglichen Gehäuse befindet, die bei Verwendung ausreichend ist, um Ionisierung des Arbeitsgases zu induzieren, wodurch der gerichtete Plasmastrom erzeugt wird und das Abführen vom Plasmaabgas vom stromabwärtigen Ende des länglichen Gehäuses verursacht wird,
wobei die Plasma-erzeugende Vorrichtung (9) angepasst ist, um einen Metallkatalysator oder Metallkatalysatorvorläufer (3) radial in den gerichteten Plasmastrom einzuführen,
eine Quenchkammer (16), die das stromabwärtige Ende des länglichen Gehäuses enthält, wobei die Quenchkammer (16) angepasst ist, um ein oder mehrere Quenchgas(e) zum Quenchen des Plasmaabgases einzuführen, wodurch teilchenförmiger Metallkatalysator erzeugt wird, und ferner angepasst ist, um den teilchenförmigen Metallkatalysator axial abzuführen; und
einen temperierten Durchflussreaktor (10) stromabwärts von der Quenchkammer (16), wobei der temperierte Durchflussreaktor (10) angepasst ist, um radial eine Kohlenstoffquelle (13) einzuführen,
wobei die Längsachsen der Plasma-erzeugenden Vorrichtung (9), der Quenchkammer (16) und des temperierten Durchflussreaktors (10) im Wesentlichen kollinear sind und einen im Wesentlichen linearen Strömungsweg definieren.

7. Gerät (1) wie in Anspruch 6 beansprucht, wobei die Energiequelle eine Kathode und eine Anode ist, die im Mittelstrahl im länglichen Gehäuse in voneinander beabstandeter Beziehung angebracht sind, zwischen denen bei Verwendung ein Lichtbogen gebildet wird.

8. Gerät (1) wie in Anspruch 6 beansprucht, wobei die Energiequelle eine Induktionsspule ist, die im Mittelstrahl im länglichen Gehäuse angebracht ist.

9. Gerät (1) wie in einem der Ansprüche 6 bis 8 beansprucht, wobei die Plasma-erzeugende Vorrichtung (9) angepasst ist, um einen Metallkatalysator oder Metallkatalysatorvorläufer (3) radial in den gerichteten Plasmastrom durch eine Sekundäreinspeisung (8) in das längliche Gehäuse einzuführen.

10. Gerät (1) wie in einem der Ansprüche 6 bis 9 beansprucht, wobei der Abstand zwischen dem Abführungspunkt des teilchenförmigen Metallkatalysators und dem Einführungspunkt der Kohlenstoffquelle (13) 10 cm oder weniger beträgt.

## Revendications

1. Procédé pour la production de nanotubes de carbone, comprenant les opérations consistant à :
(A) générer un courant dirigé de plasma depuis un gaz de travail dans un dispositif générateur de plasma (9) ;
(B) introduire un catalyseur métallique ou un précurseur de catalyseur métallique (3) radialement dans le courant dirigé de plasma dans le dispositif générateur de plasma (9) ;
(C) décharger un effluent de plasma depuis le dispositif générateur de plasma (9) dans une chambre d'inactivation (16) ;
(D) introduire un ou plusieurs gaz d'inactivation dans la chambre d'inactivation (16) pour inactiver l'effluent de plasma de façon à produire ainsi un catalyseur métallique particulaire ;
(E) décharger le catalyseur métallique particulaire depuis la chambre d'inactivation (16) axialement dans un réacteur à écoulement traversant régulé en température (10) ;
(F) introduire une source de carbone (13) radialement dans le réacteur à écoulement traversant régulé en température (10) pour produire des nanotubes de carbone ; et
(G) décharger les nanotubes de carbone depuis un orifice de décharge (14) du réacteur à écoulement traversant régulé en température (10).

2. Procédé selon la revendication 1, dans lequel le catalyseur métallique particulaire est un catalyseur métallique nanoparticulaire.

3. Procédé selon la revendication 1 ou 2, dans lequel le courant dirigé de plasma est généré à partir du gaz de travail dans l'étape (A) par un courant continu ou un champ électrique à radiofréquence.

4. Procédé selon l'une quelconque des revendications précédentes, dans lequel le temps de séjour dans la chambre d'inactivation (16) est inférieur à 1000 ms.

5. Procédé selon l'une quelconque des revendications précédentes, dans lequel l'étape (F) consiste à :
introduire la source de carbone (13) sensiblement dans un plan radial à une pluralité d'angles situés dans la plage de -90° à +90°.

6. Appareil (1) pour la production de nanotubes de carbone comprenant :
un dispositif générateur de plasma (9) pour générer un courant dirigé de plasma, où le dispositif générateur de plasma (9) comprend :
un boîtier allongé s'étendant d'une extrémité amont à une extrémité aval,
une alimentation primaire au niveau ou à proximité de l'extrémité amont du boîtier allongé pour introduire un courant continu d'un gaz de travail depuis l'extrémité amont vers et au-delà de l'extrémité aval du boîtier allongé,
une source d'énergie localisée à mi-chemin dans le boîtier allongé qui, lors de l'utilisation, est suffisante pour induire une ionisation du gaz de travail de façon à générer le courant dirigé de plasma et à provoquer la décharge d'effluent de plasma depuis l'extrémité aval du boîtier allongé,
le dispositif générateur de plasma (9) étant conçu pour introduire un catalyseur métallique ou un précurseur de catalyseur métallique (3) radialement dans le courant dirigé de plasma,
une chambre d'inactivation (16) contenant l'extrémité aval du boîtier allongé, la chambre d'inactivation (16) étant conçue pour introduire un ou plusieurs gaz d'inactivation pour inactiver l'effluent de plasma de façon à produire ainsi un catalyseur métallique particulaire, et étant en outre conçue pour décharger axialement le catalyseur métallique particulaire ; et
un réacteur à écoulement traversant régulé en température (10) en aval de la chambre d'inactivation (16), le réacteur à écoulement traversant régulé en température (10) étant conçu pour introduire radialement une source de carbone (13),
dans lequel les axes longitudinaux du dispositif générateur de plasma (9), de la chambre d'inactivation (16) et du réacteur à écoulement traversant régulé en température (10) sont pratiquement colinéaires et définissent un trajet d'écoulement pratiquement linéaire.

7. Appareil (1) selon la revendication 6, dans lequel la source d'énergie est une cathode et une anode montées à mi-chemin dans le boîtier allongé en relation mutuellement espacée, entre lesquelles, lors de l'utilisation, il se forme un arc électrique.

8. Appareil (1) selon la revendication 6, dans lequel la source d'énergie est une bobine d'induction montée à mi-chemin dans le boîtier allongé.

9. Appareil (1) selon l'une quelconque des revendications 6 à 8, dans lequel le dispositif générateur de plasma (9) est conçu pour introduire un catalyseur métallique ou un précurseur de catalyseur métallique (3) radialement dans le courant dirigé de plasma au moyen d'une alimentation secondaire (8) dans le boîtier allongé.

10. Appareil (1) selon l'une quelconque des revendications 6 à 9, dans lequel la distance entre le point de décharge du catalyseur métallique particulaire et le point d'introduction de la source de carbone (13) est de 10 cm ou moins.
